# EUROPÄISCHE PATENTSCHRIFT

(11) **EP 4 532 959 B1**
(45) Veröffentlichungstag und Bekanntmachung des Hinweises auf die Patenterteilung: **08.07.2026**
(21) Anmeldenummer: 23726866.9
(22) Anmeldetag: 02.05.2023
(51) Int. Cl.: F16H 57/04

(54) **GETRIEBE MIT GEHÄUSE UND LAGERFLANSCH**
TRANSMISSION COMPRISING A HOUSING AND A BEARING FLANGE
TRANSMISSION COMPRENANT UN CARTER ET UNE BRIDE DE PALIER

(30) Priorität: 31.05.2022 CN 202210610558; 20.09.2022 DE 102022003469
(43) Veröffentlichungstag der Anmeldung: 09.04.2025
(73) Patentinhaber: SEW-EURODRIVE GmbH & Co. KG, 76646 Bruchsal (DE)
(72) Erfinder: QIONGHUA, Gao, Tianjin (CN)
(86) Internationale Anmeldenummer: PCT/EP2023/025200
(87) Internationale Veröffentlichungsnummer: WO 2023/232281

(56) Entgegenhaltungen:
- WO-A1-2012/123046
- WO-A1-2014/079998
- CN-U- 204 900 782
- DE-B3- 102004 053 079
- JP-A- 2005 163 928

## Beschreibung

Die Erfindung betrifft ein Getriebe mit Gehäuse und Lagerflansch.

Es ist allgemein bekannt, dass die ölgeschmierten Verzahnungsteile eines Getriebes von einem Gehäuse umgeben sind.

Aus der DE 10 2004 053 079 B3 ist eine Lageranordnung bekannt.

Aus der CN 204 900 782 U ist ein Getriebe mit einer Lageranordnung bekannt.

Aus der DE 39 02 172 A1 ist ein Verfahren zum Schmieren eines Lagers bekannt.

Aus der JP 2005- 163 928 A ist eine Lageranordnung für ein Differentialgetriebe bekannt.

Aus der US 2004 / 0 109 624 A1 ist eine Kugellageranordnung mit einer doppelten Laufschiene bekannt.

Aus der DE 102 34 749 A1 ist ein Kegelradgetriebe bekannt.

Aus der DE 10 2009 014 314 A1 ist ein Getriebe mit einem topfförmigen Gehäuseteil bekannt.

**Aus der** WO 2012/123046 A1 **ist als nächstliegender Stand der Technik eine Getriebevorrichtung bekannt.**

**Aus der** JP 2005 163 928 A **ist eine Lageranordnung bekannt.**

**Aus der** CN 204 900 782 U **ist ein Getriebe bekannt.**

**Aus der WO 2014/ß79998 A1 ist eine Adapterbaugruppe bekannt.**

**Aus der** DE 10 2004 053079 B3 **ist eine Lageranordnung bekannt.**

Der Erfindung liegt daher die Aufgabe zugrunde, die Schmierung eines Getriebes weiterzubilden.

Erfindungsgemäß wird die Aufgabe bei dem Getriebe nach den in Anspruch 1 angegebenen Merkmalen gelöst.

Wichtige Merkmale der Erfindung bei dem Getriebe mit Gehäuse und Lagerflansch sind, dass im Lagerflansch ein erstes und ein zweites Lager aufgenommen ist zur drehbaren Lagerung der eintreibenden Welle des Getriebes,
wobei der Lagerflansch mit dem Gehäuse verbunden ist,
wobei ein vom Gehäuse zumindest teilweise umgebener Innenraum zumindest teilweise mit Öl befüllt ist,
insbesondere wobei die im Innenraum angeordneten, miteinander im Eingriff sich befindenden Verzahnungen vom Öl geschmiert sind und/oder wobei die im Gehäuse aufgenommenen Lager der abtreibenden Welle und/oder Zwischenwelle des Getriebes vom Öl geschmiert sind,
wobei im Lagerflansch eine erste Dichtung, insbesondere eine als zur eintreibenden Welle hin abdichtender Wellendichtring ausgeführte erste Dichtung, aufgenommen ist,
wobei das erste und das zweite Lager mit Fett geschmiert sind.

Von Vorteil ist dabei, dass die Schmierung des Getriebes weitergebildet ist. Denn die Fettschmierung von Lagern der eintreibenden Welle ist nun abgetrennt von der Ölschmierung der weiteren Schmierstellen, insbesondere miteinander im Eingriff sich befindenden Verzahnungsteilen. Insbesondere ist also die Lagerung der eintreibenden Welle mit Fett geschmiert und die weiteren Verzahnungsteile und Lagerungen sind mit Öl geschmiert. Dies ermöglicht eine vertikale Orientierung der eintreibenden Welle. Denn bei vertikaler Ausrichtung der eintreibenden Welle würde das Öl nach unten aus der Lagerung der eintreibenden Welle entweichen, da die Lagerung oberhalb des sich im Ruhezustand des Getriebes sich einstellenden Ölpegels angeordnet ist. Durch den ersten Wellendichtring ist aber der das Fett enthaltende Innenraumbereich, welcher die Lagerung aufnimmt, abgetrennt von dem Innenraum des Getriebes, der das Öl enthält.

Der die Lagerung aufnehmende Innenraumbereich ist oberhalb des Innenraums anordenbar. Trotzdem ist also die Lagerung der eintreibenden Welle geschmiert.

Bei einer vorteilhaften Ausgestaltung ist im Gehäuse zumindest ein Lager zur drehbaren Lagerung der abtreibenden Welle aufgenommen. Von Vorteil ist dabei, dass das Lager der abtreibenden Welle ölgeschmiert ist, insbesondere auch bei Stillstand des Getriebes. Da die abtreibende Welle senkrecht zur eintreibenden Welle ausgerichtet ist, ist die abtreibende Welle vorzugsweise horizontal ausrichtbar und/oder das Getriebe auf einem Boden aufstellbar.

Bei einer vorteilhaften Ausgestaltung ist in einem Dichtflansch eine zweite Dichtung, insbesondere eine als Wellendichtring ausgeführte zweite Dichtung, aufgenommen,
wobei der Dichtflansch mit dem Lagerflansch verbunden ist,
insbesondere wobei die zweite Dichtung zur eintreibenden Welle hin abdichtet,
insbesondere wobei der Dichtflansch von Schrauben an den Lagerflansch angedrückt wird. Von Vorteil ist dabei, dass die Schutzart verbessert ist und ein Austreten von Fett aus dem Bereich des Lagerflansches verhinderbar ist.

Bei einer vorteilhaften Ausgestaltung deckt der Lagerflansch eine durch das Gehäuse durchgehende Ausnehmung des Gehäuses ab,
insbesondere wobei der Lagerflansch mit dem Gehäuse dicht verbunden ist, indem eine Dichtung, insbesondere Flachdichtung zwischen Gehäuse und Lagerflansch zwischengeordnet ist,
insbesondere wobei der Lagerflansch von weiteren Schrauben an das Gehäuse angedrückt wird. Von Vorteil ist dabei, dass der Lagerflansch mit der Lagerung der eintreibenden Welle und der eintreibenden Welle selbst vorkomplettiert herstellbar ist, also als transportfähige und lagerfähige Einheit herstellbar ist. Dadurch ist die Fettschmierung schon vor dem Einbau ins Getriebe ausführbar.

Bei einer vorteilhaften Ausgestaltung ist der Innenring des ersten Lagers auf die eintreibende Welle aufgesteckt,
wobei der Innenring des zweiten Lagers auf die eintreibende Welle aufgesteckt ist,
insbesondere wobei der Außenring des ersten Lagers im Lagerflansch aufgenommen ist,
insbesondere wobei der Außenring des zweiten Lagers im Lagerflansch aufgenommen ist. Von Vorteil ist dabei, dass die Lagerung der eintreibenden Welle durch zwei Wälzlager ausführbar ist, insbesondere welche jeweils einen Innenring, einen Außenring und Wälzkörper aufweisen.

Bei einer vorteilhaften Ausgestaltung ist die Drehachse der eintreibenden Welle vertikal ausgerichtet. Von Vorteil ist dabei, dass die eintreibende Welle oberhalb des Öls lagerbar ist, insbesondere der die Lagerung der eintreibenden Welle aufnehmende Lagerflansch an der Oberseite des Gehäuses anbaubar ist.

Bei einer vorteilhaften Ausgestaltung ist die Drehachse der abtreibenden Welle horizontal ausgerichtet. Von Vorteil ist dabei, dass das Getriebe als Winkelgetriebe ausführbar ist.

Bei einer vorteilhaften Ausgestaltung ist das erste Lager vom zweiten Lager in axialer Richtung beabstandet. Von Vorteil ist dabei, dass die axiale Richtung parallel zur Drehachse der eintreibenden Welle ausgerichtet ist. Ebenso bezieht sich die Radialrichtung auf diese Drehachse und der Umfangswinkel ebenso.

Bei einer vorteilhaften Ausgestaltung ist die axiale Richtung parallel zur Richtung der Drehachse der eintreibenden Welle ausgerichtet,
insbesondere und senkrecht zur Richtung der Drehachse der abtreibenden Welle ausgerichtet ist. Von Vorteil ist dabei, dass die Drehachse der eintreibenden Welle vorzugsweise vertikal gerichtet ist, insbesondere also parallel zur Gravitationsrichtung ausgerichtet ist.

Bei einer vorteilhaften Ausgestaltung ist ein Verzahnungsteil, insbesondere Ritzel oder Zahnrad, mit der eintreibenden Welle drehfest verbunden. Von Vorteil ist dabei, dass die eintreibende Welle das Verzahnungsteil antreibt.

**Erfindungsgemäß** ist ein durch den Lagerflansch durchgehend ausgebildeter Kanal im Lagerflansch angeordnet,
wobei der Kanal vom Innenraumbereich des Lagerflansches zum Innenraum des Getriebes führt. Von Vorteil ist dabei, dass im Schadensfall, insbesondere also bei Versagen der ersten Dichtung, eingedrungenes Öl zurückführbar ist in den Innenraum des Getriebes, welcher vom Gehäuse umgeben ist.

Bei einer vorteilhaften Ausgestaltung ist der Kanal aus einer Axialbohrung und einer durch den Lagerflansch durchgehenden Radialbohrung gebildet,
wobei die Axialbohrung in die Radialbohrung mündet. Von Vorteil ist dabei, dass eine einfache Herstellung ermöglicht ist. Allerdings ist die Festigkeit durch das Vorsehen der Axialbohrung in einer radialen Erhebung des Lagerflansches gewährleistbar.

Bei einer vorteilhaften Ausgestaltung ist die Radialbohrung mittels einer Verschlussschraube zur äußeren Umgebung des Lagerflansches hin abgedichtet. Von Vorteil ist dabei, dass eine hohe Schutzart erreichbar ist.

**Erfindungsgemäß** ist am Lagerflansch eine radial gerichtete Erhebung ausgeformt, durch welche der Kanal verläuft und/oder durchgeht,
insbesondere wobei die Erhebung einen Umfangswinkelbereich überdeckt, der weniger als 20°, insbesondere weniger als 10°, überdeckt,
insbesondere wobei die Verschlussschraube in einen Gewindebereich der Radialbohrung eingeschraubt ist, insbesondere welcher in der Erhebung angeordnet ist. Von Vorteil ist dabei, dass der Kanal durch die Erhebung geführt ist und somit die Stabilität des Lagerflansches gesichert ist.

**Erfindungsgemäß** mündet der Kanal axial zwischen dem ersten und dem zweiten Lager in den Innenraumbereich. Von Vorteil ist dabei, dass auch bei Versagen der ersten Dichtung das obere der beiden Lager mit Fett geschmiert bleibt, weil das Öl durch den Kanal herausgeleitet wird aus dem Innenraumbereich des Lagerflansches. Denn auch wenn die erste Dichtung versagt, wirkt das untere der beiden Lager auf die Ölströmung beruhigend, so dass im Schadensfall der Ölpegel nur langsam vom ersten Lager aus ansteigt und somit das Öl in den Kanal abfließt, ohne das obere der beiden Lager zu beaufschlagen.

Bei einer vorteilhaften Ausgestaltung ragt die eintreibende Welle axial beidseitig aus dem Lagerflansch hervor. Von Vorteil ist dabei, dass eine Rotorwelle eines Elektromotors mit dem äußeren Ende der eintreibenden Welle direkt oder über eine Kupplung drehfest verbindbar ist. Am inneren Ende der eintreibenden Welle ist ein Verzahnungsteil drehfest angeordnet, welches zusammen mit einem Zahnrad im Eingriff ist und somit die erste Getriebestufe des Getriebes bildet.

Bei einer vorteilhaften Ausgestaltung ragt die eintreibende Welle durch den Lagerflansch hindurch. Von Vorteil ist dabei, dass der Lagerflansch die eintreibende Seite des Getriebes bildet und als vorkomplettierte Einheit mit Dichtungen und Lagern sowie mit der eintreibenden Welle ausgebildet ist. Diese Einheit deckt nach Anbau an das Gehäuse eine Ausnehmung des Gehäuses ab, die am oberen Ende des Gehäuses vorgesehen ist und auch zum Befüllen des Innenraums des Getriebes mit Öl nutzbar ist, insbesondere vor dem Anbauen der Einheit ans Gehäuse.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein erstes erfindungsgemäßes Getriebe in Schrägansicht dargestellt.
In der Figur 2 ist ein zweites erfindungsgemäßes Getriebe mit Ölausgleichsbehälter 5 in Schrägansicht dargestellt.
In der Figur 3 ist ein Teilbereich der eintreibenden Seite des zweiten Getriebes in Schrägansicht dargestellt.
In der Figur 4 ist eine Schnittansicht des Teilbereichs dargestellt.

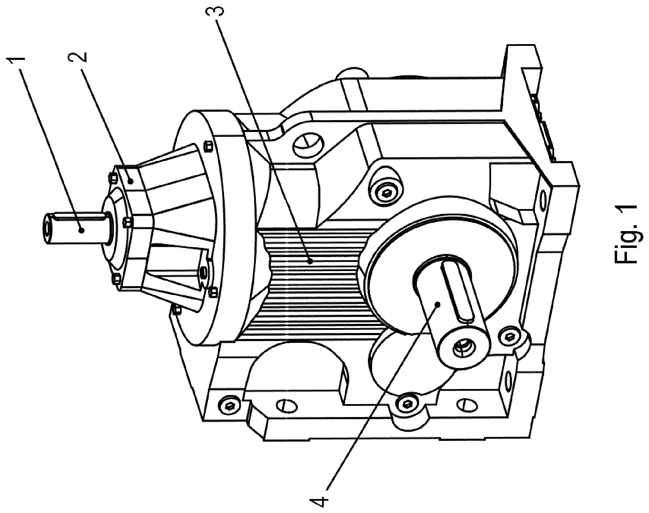

Wie in Figur 1 dargestellt, weist das erste Getriebe ein Gehäuse 3, insbesondere Getriebegehäuseteil, auf, mit dem ein Lagerflansch 2 verbunden ist, in welchem Lager (42, 44) aufgenommen sind zur drehbaren Lagerung der eintreibenden Welle 1.

Eine abtreibende Welle 4 des Getriebes ist drehbar gelagert zum Gehäuse 3 vorgesehen.

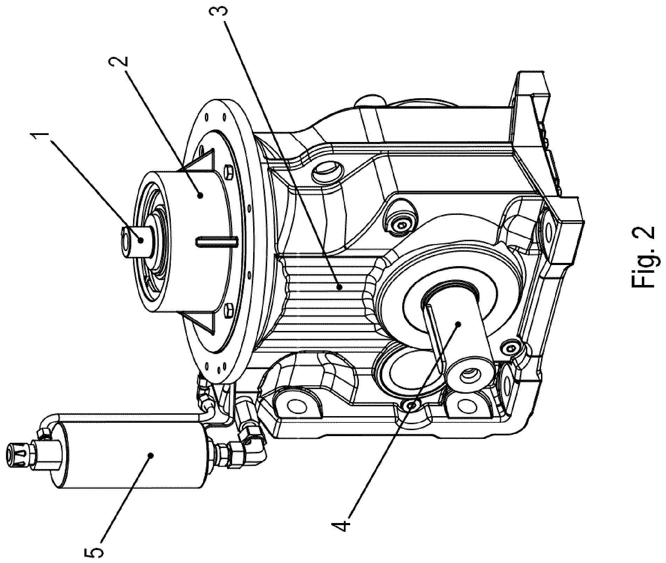

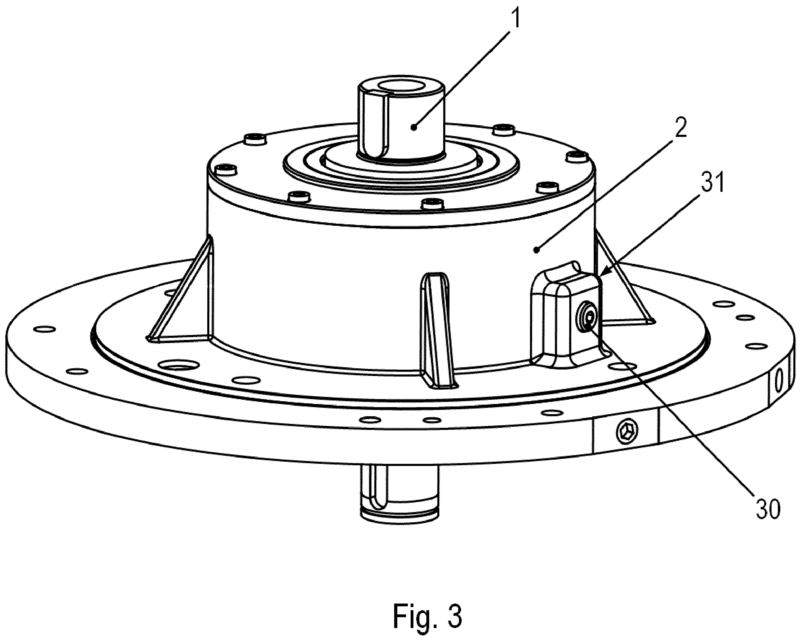

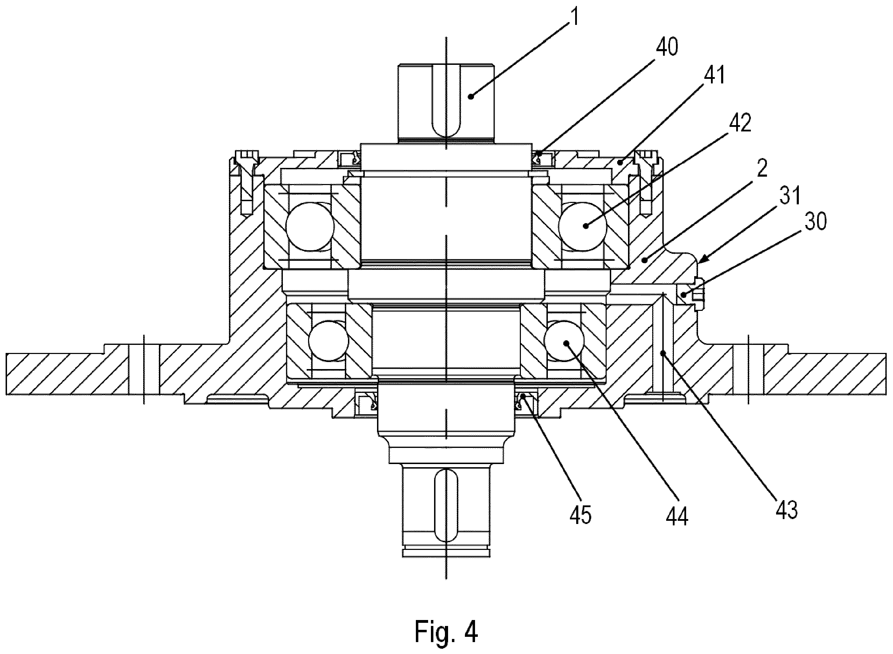

Wie in den Figuren 2 bis 4 dargestellt, weist das zweite Getriebe im Unterschied zum ersten Getriebe nach Figur 1 einen Ölausgleichsbehälter 5 auf.

Die eintreibende Welle 1 ragt in den Innenraum des Getriebes hinein und ist dort formschlüssig mit einem ersten Verzahnungsteil, insbesondere Zahnrad oder Ritzel, drehfest verbunden, insbesondere mittels Passfederverbindung.

Das Verzahnungsteil ist mit einem weiteren Verzahnungsteil im Eingriff, das drehfest mit einer Zwischenwelle verbunden ist, mit der auch ein drittes Verzahnungsteil verbunden ist, das mit einem letzten Zahnrad im Eingriff steht, welches drehfest mit der abtreibenden Welle 4 verbunden ist.

Der Innenraum des Getriebes umfasst somit die miteinander im Eingriff sich befindenden Verzahnungsteile und ist mit Schmieröl befüllt. Somit ist das Getriebe ölgeschmiert ausgeführt.

Thermisch bedingte Volumenänderungen des Schmieröls werden vom Ölausgleichsbehälter 5 aufgefangen.

Das Getriebe ist als Winkelgetriebe ausgeführt. Daher ist die eintreibende Welle 1 senkrecht zur abtreibenden Welle 4 ausgerichtet.

Vorzugsweise wird das Getriebe derart ausgerichtet, dass die Drehachse der eintreibenden Welle 1 vertikal ausgerichtet ist, insbesondere also parallel zur Gravitationsrichtung.

Die Lagerung der eintreibenden Welle 1 ist mit Fett geschmiert.

Somit sind also sowohl das erste Lager 42 als auch das zweite Lager 44 mit Fett geschmiert.

Mittels des Lagerflansches 2 ist eine Ausnehmung des Gehäuses 3 abgedeckt. Der Lagerflansch 2 ist mit dem Gehäuse 3 mittels Schrauben verbunden, insbesondere mittels der Schrauben angedrückt an das Gehäuse 3. Eine zwischen das Gehäuse 3 und den Lagerflansch 2 zwischengeordnete Flachdichtung gewährleistet die Öldichtigkeit.

Im Lagerflansch 2 ist das erste Lager 42 aufgenommen, dessen Innenring auf die eintreibende Welle 1 aufgesteckt ist. Außerdem ist vom ersten Lager 42 axial beabstandet das zweite Lager 42 aufgenommen, dessen Innenring ebenfalls auf die eintreibende Welle 1 aufgesteckt ist.

Zur Verhinderung des Eindringens von Schmieröl aus dem Innenraum des Getriebes in den vom Lagerflansch umgebenen, zumindest teilweise mit Fett gefüllten Innenraumbereich ist eine Dichtung 45 im Lageflansch 2 aufgenommen, welche zur eintreibenden Welle 1 hin abdichtet.

Auf der von der Dichtung 45 axial abgewandten Seite des Lagerflansches 2 ist ein Dichtflansch 41 von Schrauben an den Lagerflansch 2 angedrückt, welche in axial gerichtete Gewindebohrungen eingeschraubt sind.

Im Dichtflansch 41 ist eine Dichtung 40, insbesondere ein Wellendichtring, aufgenommen, welche zur eintreibenden Welle 1 hin abdichtet.

Der Dichtflansch 41 deckt somit den Lagerflansch 2 auf seiner vom Gehäuse 3 abgewandten Seite ab.

Somit ist ein axial zwischen den beiden Dichtungen 40 und 45 angeordneter Innenraumbereich mit Fett zumindest teilweise befüllt und abgedichtet.

Falls jedoch die Dichtung 45 versagt, kann Schmieröl aus dem Innenraum des Getriebes in den Innenraumbereich eindringen, insbesondere infolge von im Betrieb des Getriebes zum Lagerflansch 2 hin bewegtem, insbesondere herumgespritztem, Schmieröl.

Zur Ableitung eines solchen im Schadenfall in den Innenraumbereich eindringenden Schmieröls ist ein Kanal 43 im Lagerflansch 2 vorgesehen. Dieser Kanal mündet einerseits in den Innenraum des Getriebes und andererseits in den Innenraumbereich axial zwischen den beiden Lagern 42 und 44.

Der Kanal verläuft vorwiegend in einer radialen Erhebung 31 des Lagerflansches 2, die sich aber nur über einen ersten Umfangswinkelbereich erstreckt. Der auf die Drehachse der eintreibenden Welle bezogene erste Umfangswinkelbereich ist kleiner als 20°, insbesondere kleiner als 10°.

Die Erhebung 31 ragt also radial am Lagerflansch 2 hervor. In der Erhebung ist eine durchgehende Radialbohrung eingebracht, die an ihrem äußeren Ende mittels eines in einen Gewindebereich der Radialbohrung eingeschraubten Verschlussstopfens 30 verschlossen ist.

Die Radialbohrung des Kanals ist also in der bevorzugten Ausrichtung des Getriebes eine horizontal ausgerichtete Bohrung. Insbesondere mündet die Radialbohrung in den Innenraumbereich

Eine Axialbohrung des Kanals mündet in die Radialbohrung und ist ebenfalls in den Lagerflansch 2 eingebracht.

Der Kanal ist also aus der durchgehenden, aber mit der Verschlussschraube 30 einseitig verschlossenen Radialbohrung und der Axialbohrung gebildet.

Falls also im Schadensfall Öl in den durch die Dichtungen 40 und 45 abgedichteten Innenraumbereich eindringt, ist eine Abfuhr über den Kanal zurück in den Innenraum des Getriebes sichergestellt.

Bei weiteren erfindungsgemäßen Ausführungsbeispielen wird an der Mündung des Kanals in den Innenraum des Getriebes ein Einwegeventil angeordnet, insbesondere um Rückfluss vom Innenraum des Getriebes in den Innenraumbereich des Lagerflansches zu verhindern. Alternativ oder zusätzlich ist am Lagerflansch ein Schutzblech angebracht, das die Mündung des Kanals zum Innenraum des Getriebes hin abdeckt, wobei aber zwischen Mündung und Schutzblech ein Spalt angeordnet ist, Auf diese Weise ist ein Einströmen von Schmieröl zum Mündungsbereich erschwert.

Bei weiteren erfindungsgemäßen Ausführungsbeispielen wird das Getriebe nicht zweistufig, sondern einstufig, dreistufig oder mehrstufig ausgeführt.

### Bezugszeichenliste

1 eintreibende Welle
2 Lagerflansch
3 Gehäuse, insbesondere Getriebegehäuseteil
4 abtreibende Welle
5 Ölausgleichsbehälter
30 Verschlussschraube
31 radiale Erhebung des Lagerflansches 2
40 Dichtung
41 Dichtflansch
42 Lager
43 Kanal, insbesondere aus radial durchgehender und axialer Bohrung gebildeter Kanal
44 Lager
45 Dichtung

## Patentansprüche

1. Getriebe mit Gehäuse (3) und Lagerflansch (2),
wobei im Lagerflansch (2) ein erstes und ein zweites Lager (44, 42) aufgenommen ist zur drehbaren Lagerung **einer** eintreibenden Welle (1) des Getriebes,
wobei der Lagerflansch (2) mit dem Gehäuse (3) verbunden ist,
wobei ein vom Gehäuse (3) zumindest teilweise umgebener Innenraum zumindest teilweise mit Öl befüllt ist,
**wobei** im Lagerflansch (2) eine **als zur eintreibenden Welle (1) hin abdichtender Wellendichtring ausgeführte erste Dichtung (45)** aufgenommen ist,
wobei das zweite Lager (42) mit Fett geschmiert ist, **dadurch gekennzeichnet, dass**
**das erste Lager (44) mit Fett geschmiert** ist,
**wobei ein durch den Lagerflansch (2) durchgehend ausgebildeter Kanal (43) im Lagerflansch (2) angeordnet ist,**
**wobei der Kanal (43) vom Innenraumbereich des Lagerflansches (2) zum Innenraum des Getriebes führt,**
**wobei der Kanal (43) axial zwischen dem ersten und dem zweiten Lager (42) in den Innenraumbereich mündet,**
**wobei am Lagerflansch (2) eine radial gerichtete Erhebung (31) ausgeformt ist, durch welche der Kanal (43) verläuft.**

2. Getriebe nach Anspruch 1,
**dadurch gekennzeichnet, dass**
im Gehäuse (3) zumindest eines der Lager (42, 44) zur drehbaren Lagerung der abtreibenden Welle (4) aufgenommen ist.

3. Getriebe nach einem der vorangegangenen Ansprüche,
**dadurch gekennzeichnet, dass**
in einem Dichtflansch (41) eine eine als Wellendichtring ausgeführte zweite Dichtung (40) aufgenommen ist,
wobei der Dichtflansch (41) mit dem Lagerflansch (2) verbunden ist,
wobei die zweite Dichtung (40) zur eintreibenden Welle (1) hin abdichtet,

4. Getriebe nach einem der vorangegangenen Ansprüche,
**dadurch gekennzeichnet, dass**
der Lagerflansch (2) eine durch das Gehäuse (3) durchgehende Ausnehmung des Gehäuses (3) abdeckt,

5. Getriebe nach einem der vorangegangenen Ansprüche,
**dadurch gekennzeichnet, dass**
der Innenring des ersten Lagers (44) auf die eintreibende Welle (1) aufgesteckt ist,
der Innenring des zweiten Lagers (42) auf die eintreibende Welle (1) aufgesteckt ist,

6. Getriebe nach einem der vorangegangenen Ansprüche,
**dadurch gekennzeichnet, dass**
die Drehachse der eintreibenden Welle (1) vertikal ausgerichtet ist

7. **Getriebe nach einem der vorangegangenen Ansprüche,**
**dadurch gekennzeichnet, dass**
die Drehachse einer abtreibenden Welle (4) horizontal ausgerichtet ist.

8. Getriebe nach einem der vorangegangenen Ansprüche,
**dadurch gekennzeichnet, dass**
das erste Lager (44) vom zweiten Lager (42) in axialer Richtung beabstandet ist.

9. Getriebe nach einem der vorangegangenen Ansprüche,
**dadurch gekennzeichnet, dass**
die axiale Richtung parallel zur Richtung der Drehachse der eintreibenden Welle (1) ausgerichtet ist,

10. Getriebe nach einem der vorangegangenen Ansprüche,
**dadurch gekennzeichnet, dass**
ein Verzahnungsteil, mit der eintreibenden Welle (1) drehfest verbunden ist.

11. Getriebe nach einem der vorangegangenen Ansprüche,
**dadurch gekennzeichnet, dass**
der Kanal (43) aus einer Axialbohrung und einer durch den Lagerflansch (2) durchgehenden Radialbohrung gebildet ist,
wobei die Axialbohrung in die Radialbohrung mündet.

12. Getriebe nach einem der vorangegangenen Ansprüche,
**dadurch gekennzeichnet, dass**
die Radialbohrung mittels einer Verschlussschraube (30) zur äußeren Umgebung des Lagerflansches (2) hin abgedichtet ist.

13. Getriebe nach einem der vorangegangenen Ansprüche,
**dadurch gekennzeichnet, dass**
**der von der Erhebung (31) einen Umfangswinkelbereich überdeckt, der weniger als 20°, überdeckt,**

14. Getriebe nach einem der vorangegangenen Ansprüche,
**dadurch gekennzeichnet, dass**
die eintreibende Welle (1) axial beidseitig aus dem Lagerflansch (2) hervorragt

15. **Getriebe nach einem der vorangegangenen Ansprüche,**
**dadurch gekennzeichnet, dass**
die eintreibende Welle (1) durch den Lagerflansch (2) hindurchragt.

## Claims

1. Transmission comprising a housing (3) and a bearing flange (2),
wherein a first and a second bearing (44, 42) are accommodated in the bearing flange (2) for rotatably bearing an input shaft (1) of the transmission,
wherein the bearing flange (2) is connected to the housing (3), wherein an interior, which is at least partially enclosed by the housing (3), is at least partially filled with oil,
wherein a first seal (45), which is embodied as a shaft sealing ring that seals with respect to the input shaft (1), is accommodated in the bearing flange (2),
wherein the second bearing (42) is lubricated with grease, **characterized in that**
the first bearing (44) is lubricated with grease,
wherein a channel (43) is arranged in the bearing flange (2), said channel being designed to extend continuously through the bearing flange (2),
wherein the channel (43) leads from the interior area of the bearing flange (2) to the interior of the transmission, wherein the channel (43) opens into the interior area axially between the first and the second bearing (42),
wherein a radially directed protuberance (31), through which the channel (43) extends, is formed on the bearing flange (2).

2. Transmission according to claim 1,
**characterized in that**
at least one of the bearings (42, 44) for rotatably bearing the output shaft (4) is accommodated in the housing (3).

3. Transmission according to any one of the preceding claims, **characterized in that**
a second seal (40), which is embodied as a shaft sealing ring, is accommodated in a sealing flange (41),
wherein the sealing flange (41) is connected to the bearing flange (2),
wherein the second seal (40) seals with respect to the input shaft (1).

4. Transmission according to any one of the preceding claims, **characterized in that**
the bearing flange (2) covers an opening of the housing (3) that extends through the housing (3).

5. Transmission according to any one of the preceding claims, **characterized in that**
the inner ring of the first bearing (44) is mounted on the input shaft (1),
the inner ring of the second bearing (42) is mounted on the input shaft (1).

6. Transmission according to any one of the preceding claims, **characterized in that**
the axis of rotation of the input shaft (1) is oriented vertically.

7. Transmission according to any one of the preceding claims, **characterized in that**
the axis of rotation of an output shaft (4) is oriented horizontally.

8. Transmission according to any one of the preceding claims, **characterized in that**
the first bearing (44) is spaced apart from the second bearing (42) in an axial direction.

9. Transmission according to any one of the preceding claims, **characterized in that**
the axial direction is oriented parallel to the direction of the axis of rotation of the input shaft (1).

10. Transmission according to any one of the preceding claims, **characterized in that**
a toothed part is co-rotatably connected to the input shaft (1).

11. Transmission according to any one of the preceding claims, **characterized in that**
the channel (43) is formed of an axial bore and of a radial bore that extends through the bearing flange (2),
wherein the axial bore opens into the radial bore.

12. Transmission according to any one of the preceding claims, **characterized in that**
the radial bore is sealed off with respect to the exterior environment of the bearing flange (2) by means of a closure screw (30).

13. Transmission according to any one of the preceding claims, **characterized in that**
the of the protuberance (31) covers a circumferential angle range of less than 20°.

14. Transmission according to any one of the preceding claims, **characterized in that**
the input shaft (1) projects from the bearing flange (2) axially on both sides.

15. Transmission according to any one of the preceding claims, **characterized in that**
the input shaft (1) projects through the bearing flange (2).

## Revendications

1. Engrenage avec boîtier (3) et bride de palier (2),
dans lequel un premier et un deuxième palier (44, 42) sont reçus dans la bride de palier (2) pour le support rotatif d'un arbre d'entraînement (1) de l'engrenage,
dans lequel la bride de palier (2) est reliée au boîtier (3),
dans lequel un espace intérieur au moins partiellement entouré par le boîtier (3) est au moins partiellement rempli d'huile,
dans lequel un premier joint (45), réalisé comme une bague d'étanchéité d'arbre assurant l'étanchéité vers l'arbre d'entraînement (1), est reçu dans la bride de palier (2),
dans lequel le deuxième palier (42) est lubrifié avec de la graisse,
**caractérisé en ce que** le premier palier (44) est lubrifié avec de la graisse,
dans lequel un canal (43) formé de manière traversante à travers la bride de palier (2) est disposé dans la bride de palier (2),
dans lequel le canal (43) mène de la zone de l'espace intérieur de la bride de palier (2) à l'espace intérieur de l'engrenage,
dans lequel le canal (43) débouche axialement entre le premier et le deuxième palier (42) dans la zone de l'espace intérieur,
dans lequel une saillie (31) orientée radialement est formée sur la bride de palier (2), à travers laquelle le canal (43) s'étend.

2. Engrenage selon la revendication 1, **caractérisé en ce que** dans le boîtier (3) au moins l'un des paliers (42, 44) est reçu pour le support rotatif de l'arbre de sortie (4).

3. Engrenage selon l'une des revendications précédentes, **caractérisé en ce que** dans une bride d'étanchéité (41) un deuxième joint (40) réalisé est reçu, dans lequel la bride d'étanchéité (41) est reliée à la bride de palier (2),
dans lequel le deuxième joint (40) assure l'étanchéité vers l'arbre d'entraînement (1),

4. Engrenage selon l'une des revendications précédentes, **caractérisé en ce que** la bride de palier (2) recouvre un évidement traversant du boîtier (3) à travers le boîtier (3),

5. Engrenage selon l'une des revendications précédentes, **caractérisé en ce que** la bague intérieure du premier palier (44) est montée sur l'arbre d'entraînement (1), la bague intérieure du deuxième palier (42) est montée sur l'arbre d'entraînement (1).

6. Engrenage selon l'une des revendications précédentes, **caractérisé en ce que** l'axe de rotation de l'arbre d'entraînement (1) est orienté verticalement

7. Engrenage selon l'une des revendications précédentes, **caractérisé en ce que** l'axe de rotation d'un arbre de sortie (4) est orienté horizontalement.

8. Engrenage selon l'une des revendications précédentes, **caractérisé en ce que** le premier palier (44) est espacé du deuxième palier (42) dans la direction axiale.

9. Engrenage selon l'une des revendications précédentes, **caractérisé en ce que** la direction axiale est orientée parallèlement à la direction de l'axe de rotation de l'arbre d'entraînement (1),

10. Engrenage selon l'une des revendications précédentes, **caractérisé en ce qu'**un élément denté, est relié de manière fixe en rotation à l'arbre d'entraînement (1).

11. Engrenage selon l'une des revendications précédentes, **caractérisé en ce que** le canal (43) est formé d'un perçage axial et d'un perçage radial traversant la bride de palier (2) , dans lequel le perçage axial débouche dans le perçage radial.

12. Engrenage selon l'une des revendications précédentes, **caractérisé en ce que** le perçage radial est étanché vers l'environnement extérieur de la bride de palier (2) au moyen d'une vis de fermeture (30).

13. Engrenage selon l'une des revendications précédentes, **caractérisé en ce que** la saillie (31) recouvre une plage angulaire périphérique qui est inférieure à 20°.

14. Engrenage selon l'une des revendications précédentes, **caractérisé en ce que** l'arbre d'entraînement (1) dépasse axialement des deux côtés de la bride de palier (2).

15. Engrenage selon l'une des revendications précédentes, **caractérisé en ce que** l'arbre d'entraînement (1) traverse la bride de palier (2).
